# EUROPEAN PATENT SPECIFICATION

(11) **EP 2 552 051 B1**
(45) Date of publication and mention of the grant of the patent: **05.09.2018**
(21) Application number: 11305992.7
(22) Date of filing: 29.07.2011
(51) Int. Cl.: H04L 12/12, H04L 12/24, H04W 52/02, H04W 24/02, H04W 28/16, H04W 72/04

(54) **Management of power consumption in a radio communication network**
Verwaltung des Stromverbrauchs in einem Funkkommunikationsnetzwerk
Gestion de consommation d'énergie dans un réseau de communication radio

(43) Date of publication of application: 30.01.2013
(73) Proprietor: Alcatel Lucent, 91620 Nozay (FR)
(72) Inventor: Frecassetti, Mario Giovanni, 20059 Vimercate (IT); Galbiati, Paolo, 20059 Vimercate (IT); Mirelli Giacomo, PLANO, TX Texas 75075 (US)
(74) Representative: Shamsaei Far, Hassan

(56) References cited:
- EP-A1- 1 357 681
- EP-A2- 1 521 398
- WO-A1-2009/034089
- US-A1- 2007 094 527
- US-A1- 2009 068 969
- US-A1- 2010 011 230

## Description

### Technical field

The present invention generally relates to the field of radio communication networks. In particular, the present invention relates to the management of power consumption in a radio communication network.

### Background art

A radio communication network typically comprises a plurality of nodes connected by radio links. Two nodes of the radio communication network exchange information in the form of a data flow (usually in the form of a stream of bits) modulating a radio signal. The number of transmitted bits in the time unit over a radio link is typically referred to as the "data transmission rate" or "data transmission capacity" or simply "capacity" of the radio link. Different modulation and coding schemes are capable of achieving different capacities.

Typically, the radio signal is affected by the propagation conditions over the radio link. For example, the propagation conditions on the radio link depend on the weather conditions, the presence/absence of interferences, the presence/absence of multi-paths, and so on. Adverse propagation conditions (i.e. bad weather, presence of interferences, presence of multi-paths) may cause the radio signal to attenuate or fade. In this situation the receiver may not correctly retrieve the data flow from the received signal and the bit error rate (BER) of the data flow accordingly increases.

As known, in order to face attenuation or fading of the radio signal due to adverse propagation conditions, the so-called Adaptive Coding Modulation technique (ACM) can be used. According to the ACM, the modulation and coding of a radio signal are dynamically varied according to the propagation conditions of the radio link used for conveying the radio signal.

In particular, according to the ACM, the transmitter typically receives from the receiver a control signal indicating the conditions of the radio link, and according to this control signal dynamically modifies the modulation and/or coding of the radio signal.

When the propagation conditions of the radio link are good (e.g. when the weather conditions are good and interferences are absent), modulation and coding schemes with the highest available data transmission capacity are usually used. Typical examples of such schemes are 16-QAM, 64-QAM, or 256-QAM (Quadrature Amplitude Modulation). Indeed, the higher the number of constellation points or symbols for a given modulation scheme, the higher the number of bits per symbol transported by the signal and hence the higher the data transmission capacity, at the expense of a lower noise immunity. On the contrary, if the propagation conditions of the radio link get worse (e.g. when fog, rain or snow is present on the radio link), one typically uses a modulation and coding scheme with a greater noise immunity and lower capacity, e.g. 4-QAM.

Recently, the need to design radio communication networks with a controlled and possibly minimized power consumption raised. This need is driven on the one side by the ever more emerging concern about the environmental impact of communication installations and on the other side by the target of reducing costs.

In the field of radio communication networks, a known technique allowing to reduce the power transmitted by a network node is the so-called Automatic Transmitter Power Control (ATPC). Such technique provides for adjusting the output power at the transmitting end of a radio link by monitoring the power of the signal detected at the receiving end of the link.

According to the ATPC technique, when the signal propagates on the radio link in good conditions, e.g. good weather, the output power of the transmitter is maintained at a value which is typically lower that its maximum value. When attenuation or fading arises and the received signal drops below a certain threshold thus leading to errors in the communication, the ATPC provides for increasing the output power of the transmitter up to a maximum value, so as to ensure that the received signal is above the threshold which guarantees an acceptable bit error rate.

WO 2009034089 relates to a methods and apparatus for reducing mobile terminal energy consumption during data transmissions by allocating link resources and adapting link parameters in an energy-aware manner, based on throughput requirements and prevailing channel conditions. A combination of transmit parameters that includes a transmit channelization scheme and is designed to minimize the total energy consumed during data transmission is selected based on a throughput requirement and one or more channel conditions associated with the data transmission. The channelization scheme includes a number of subchannels to be used and subchannel configuration parameters for each subchannel, such as spreading codes, spreading factors, and subchannel power levels. The combination of transmit parameters may also include a modulation format, coding scheme, and transmit power setting, as well as parameters relating to multiple-antenna transmit schemes.

US 20090068969 relates to a methods and apparatus for operating a multimode wireless communications device to select a radio access technology (RAT) requiring the lowest energy consumption by the device for a desired operating mode. An exemplary method comprises scanning a plurality of frequency bands to determine a set of available radio access technologies that support the desired operating mode, and evaluating, for each available RAT, RAT-specific system parameters and RAT-specific operating conditions. Based on the evaluation, the RAT requiring the lowest energy consumption by the wireless device for the desired operating mode is selected.

EP 1521398 relates to a method for managing the operation of a telecom system, and minimising the energy to be drained from a power supply, comprising the steps of determining a rate constraint, determining the telecom environment conditions, selecting a working point by solving an optimisation problem, taking into account the rate constraint and the telecom environment conditions, and given for a discrete set of telecom environment conditions a plurality of predetermined working points, and operating the telecom system at the selected working point by setting corresponding control parameters.

US 2010011230 discloses configurations and techniques for determining, by link aggregation logic, whether a load of network traffic communicated across a team of aggregated links allows inactivation of one or more aggregated links of the team, wherein the team of aggregated links is coupled with a plurality of network interface cards (NICs). On determining that the load of network traffic communicated across the team of aggregated links allows inactivation of the one or more aggregated links of the team, the link aggregation logic is configured to power off or place into a power save mode one or more NICs of the plurality of NICs corresponding to the one or more aggregated links.

EP 135768 relates to a power controllable wireless mobile communications system employing an adaptive modulation and coding scheme and a method therefor, and more particularly, to an apparatus which controls output power of a mobile station in a mobile communications system employing an adaptive modulation and coding scheme by using a signal-to-noise ratio (SNR) extracted from a backward signal which is transmitted from the mobile station to a base station and a method therefor.

US 20070094527 relates to a method of determining total electric power consumption of a managed IT network including network devices having a management-addressable address. An autodiscovery tool is run to discover the network devices of the managed IT network. Management requests are directed to the management-addressable addresses of the network devices to obtain the electric power consumption values of the network devices. The electric power consumption values returned by the network devices are centrally collected, and the total electric power consumption of the managed IT network is calculated by adding the electric power consumption values of the network devices.

### Summary of the invention

In a radio communication network implementing the ACM technique, when the propagation conditions are good, modulation and coding schemes achieving the highest capacity (i.e. the modulation schemes comprising the highest number of constellation points) are usually used and the full available capacity of the radio links is exploited. The power consumption of the network is directly related to the modulation scheme used, namely it increases as the number of constellation points increases. Accordingly, in good propagation conditions, the maximum power consumption is reached.

However, in most situations, this may result in over-provisioning the capacity of the radio links as compared with the actual amount of data exchanged between the nodes of the radio network. Therefore, disadvantageously, both the capacity of the links and the power may be unnecessarily wasted.

Even if the ATPC technique is implemented within the radio communication network in conjunction with the ACM technique, the reduction/increase of the transmitter's power according to ATPC is triggered only by the level of the signal detected at the receiver, and accordingly the actual amount of data to be transmitted over the radio link is not taken into account. Disadvantageously, this may lead to a not efficient exploitation of the capacity of the links and to a not optimized power consumption.

Accordingly, the inventors have addressed the problem of providing a method for managing the power consumption in a radio communication network, which allows optimising the power consumption and, at the same time, efficiently exploiting the capacity of the network radio links.

According to a first aspect, embodiments of the present invention provide a method for managing a power consumption of a radio communication network, the radio communication network comprising at least two nodes and a connection path for connecting the at least two nodes under propagation conditions of the connection path, the method comprising:
a) determining a set of states of the connection path, wherein the connection path, in each state, has a state capacity and a state power consumption;
b) upon reception of a request relating to traffic carried on the connection path, selecting a state having a minimum state power consumption within the set of states, the selected state having a state capacity higher than or equal to a capacity associated to the traffic and matching the propagation conditions of the connection path; and
c) operating the nodes so as to bring the connection path in the selected state.

In the following description and in the claims, the expression "propagation conditions" will indicate the conditions under which propagation of a radio signal takes place over a radio link. The propagation conditions comprise one or more of: the weather conditions over the radio link, the presence/absence of interferences, the presence/absence of multi-paths, and so on.

Moreover, the expression "a state matching the propagation conditions of the connection path" is understood as meaning that, when the connection path is brought to (namely, is operated in accordance with) such state, each radio link of the connection path has a given configuration, namely a given operational state (ON/OFF), a given modulation scheme, a given coding scheme and so on, in such a way so as to guarantee a reliable data transmission over the connection path under that propagation conditions. Furthermore, the selected state has a minimum state capacity amongst the states having a state capacity higher than or equal to the capacity associated to the traffic.

Preferably, each state of the set of states of the connection path is indicative of a possible configuration of one or more links comprised in the connection path, the possible configuration comprising, for each of the one or more links, one or more of:
- an operational state ON-OFF of the link;
- a modulation scheme applied for data transmission over the link;
- a coding scheme applied for data transmission over the link;
- a symbol rate applied for data transmission over the link; and
- a number of independent radio frequency carriers and frequencies of the radio frequency carriers used for data transmission over the link.

Preferably, the request is indicative of a variation in the capacity associated to said traffic.

Preferably, the request is indicative of a variation in the propagation conditions.

Preferably, the request is indicative of a variation in the power consumption of the connection path.

Preferably, the request is indicative of a failure affecting the connection path.

Preferably, the operating is performed by using at least one adaptive code modulation function and/or at least one automatic transmitter power control function of the nodes.

According to a second aspect, embodiments of the present invention provide a computer program product comprising computer-executable instructions for performing, when the program is run on a computer, the steps of the method as set forth above.

According to a third aspect, embodiments of the present invention provide a link manager for a radio communication network comprising at least two nodes and a connection path for connecting the at least two nodes under propagation conditions of the connection path, the link manager being configured to:
- determine a set of states of said connection path, wherein the connection path, in each state, has a state capacity and a state power consumption;
- upon reception of a request relating to traffic carried on the connection path, select a state having a minimum state power consumption within the set of states, the selected state having a state capacity higher than or equal to a capacity associated to the traffic and matching the propagation conditions of the connection path; and
- operate the nodes so as to bring the connection path in the selected state.

Preferably, the link manager is implemented at a node of the radio communication network.

Alternatively, the link manager is implemented at an apparatus connected to a node of the radio communication network.

According to a fourth aspect, the present invention provides a radio communication network comprising at least two nodes and a connection path for connecting the at least two nodes under propagation conditions of the connection path, the radio communication network further comprising a link manager as set forth above.

Preferably, the communication network further comprises a network manager configured to:
- upon reception of the request, select a state within the set of states, the selected state having a state capacity higher than or equal to a capacity associated to the traffic and the matching propagation conditions of the connection path, the selected state being such that the communication network as a whole consumes a minimum power; and
- operate the nodes so as to bring the connection path in the selected state.

### Brief description of the drawings

Embodiments of the invention will be better understood by reading the following detailed description, given by way of example and not of limitation, to be read with reference to the accompanying drawings, wherein:
- Figure 1 shows an exemplary communication network;
- Figure 2 shows in further detail a portion of the communication network of Figure 1, according to an embodiment of the present invention;
- Figure 3 shows a state table relating to the connection path comprised in the network portion shown in Figure 1; and
- Figure 4 is a flow chart illustrating the operation for setting and changing the state of the connection path comprised in the network portion shown in Figure 1.

### Detailed description of preferred embodiments of the invention

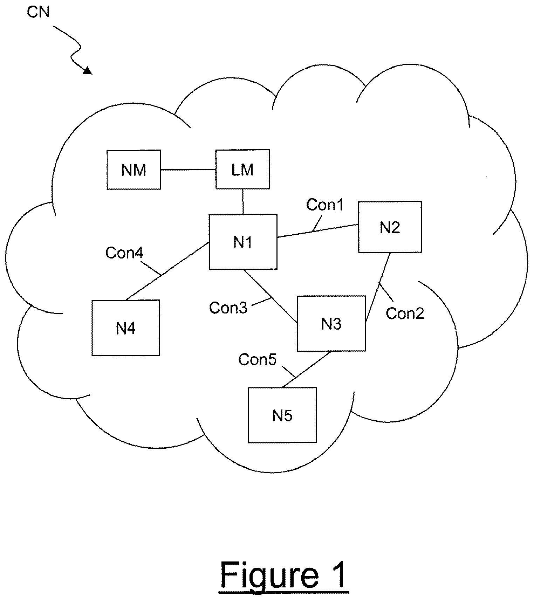

Figure 1 schematically shows a radio communication network CN (in the following description referred to also as "communication network CN") suitable for implementing the method according to a preferred embodiment of the present invention.

The radio communication network CN comprises a number of network nodes. The network nodes are interconnected by means of connection paths, each connection path comprising either a single radio link or a number of parallel radio links (in the following referred to as "links"). Each link of a connection path is terminated at its opposite ends by a transmitter and a receiver (or by two transceivers, if the link is bidirectional). In Figure 1, for sake of simplicity, five nodes N1, ... N5 are shown and five connection paths Con1, ... Con5 connecting them according to a partially meshed topology. In particular, nodes N1 and N2 are interconnected by means of a connection path Con1.

The nodes of the communication network CN may be configured to implement the Adaptive Coding Modulation (ACM) technique. Preferably, the nodes of the communication network CN are configured to implement the ACM technique in conjunction with the Automatic Transmitter Power Control (ATPC) technique.

Further, the communication network CN may optionally comprise one or more link managers and a network manager NM cooperating with the nodes of the communication network CN.

Each link manager is configured to perform management functions upon the link(s) of a connection path of the communication network CN. To this purpose, the link manager is configured to cooperate with the nodes of the communication network CN connected by that connection path. Figure 1 shows, by way of non limiting example, only one link manger LM configured to perform management functions upon connection path Con1 and therefore to cooperate with node N1 and node N2. The link manager LM may be implemented as a stand-alone apparatus connected to any one of the nodes N1, N2. In Figure 1, by way of example, the link manager LM is connected to node N1. Alternatively, the link manager LM may be integrated within one of nodes N1, N2, for instance node N1. Alternatively, the function of the link manager LM may be distributed at both the nodes N1, N2.

The network manager NM is adapted to perform management functions upon the links of all the connection paths Con1, ... Con5 of the communication network CN. The network manager NM is therefore configured to cooperate with all the nodes N1,... N5 of the communication network CN and with all the link managers of the communication network CN. The network manager NM may be implemented as a stand-alone apparatus connected either to any one of the nodes N1,... N5 or to any one of the link managers. In Figure 1, by way of non limiting example, the network manager NM is connected to the link manager LM of the connection path Con1.

In operative conditions, the communication network CN connects a plurality of users which exchange data through the nodes N1,... N5 of the network CN. The data are carried over the connection paths Con1, ... Con5, each connection path Con1, ... Con5 operating at a respective capacity (i.e. a respective data transmission rate). The data exchanged between the network nodes N1,... N5 may carry different services, each of them being associated to a respective Quality of Service (QoS).

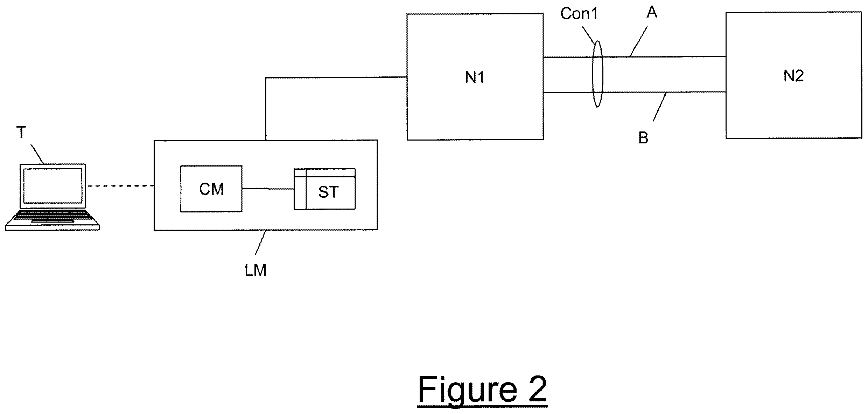

Figure 2 shows a portion of the communication network CN, comprising the nodes N1, N2, the connection path Con1 and the link manager LM. By way of non limiting example, the connection path Con 1 comprises two links A, B. Both the links A, B may be full-duplex links allowing a bidirectional exchange of information between nodes N1, N2. It is assumed that both the links A, B are able to support the transmission of digitally modulated data at a symbol rate equal to C symbol/s. The symbol rate represents the number of transmitted symbols per second, the symbol being an integer number of bits equal to or higher than 1.

As shown in Figure 2, a terminal T may be optionally connected to the link manager LM. The terminal T preferably comprises a keyboard and a display. The terminal T allows an operator responsible of managing the network to interact with the link manager LM, as it will be described in further detail herein after.

The link manager LM preferably comprises a control module CM and a state table ST.

The control module CM is preferably implemented by means of a dedicated hardware component, or by means of a hardware component capable of executing a software, in combination with a dedicated software, or by means of a dedicated software component.

The state table ST preferably comprises information indicative of a set of possible states in which the connection path Con1 may operate. The state table ST is preferably generated by the control module CM of the link manager LM, as it will be described in detail herein after.

For generating the state table ST, the operator shall know, for each link A, B of the connection path Con1, the possible link configurations. Each link configuration preferably comprise one or more of the following parameters:
- an operational state of the link, i.e. whether the link is ON (i.e. the link is working) or OFF (i.e. the link is not working);
- the modulation scheme applied for data transmission over the link;
- the coding scheme applied for data transmission over the link;
- the symbol rate applied for data transmission over the link; and
- the number of independent RF carriers and frequency of the RF carriers used to transport the data over the link.

Moreover the operator shall know, for each possible link configuration, the link capacity and the link power consumption. The link power consumption of a link comprises the power consumed by the radio interfaces terminating that link at the network nodes N1, N2 and the power emitted by the antennas at the nodes N1, N2 for transmitting the radio signals carrying the data over the link.

For simplicity, it is assumed herein after that the possible link configurations of the links A, B may differ only by operational state (namely, ON or OFF) and modulation scheme of the link. The coding scheme, the number of independent RF carriers, the frequency of the RF carriers, etc. of the links A, B are fixed. Further, it is assumed that the supported modulation schemes, the coding scheme, the number of independent RF carriers, the frequency of the RF carriers, etc. are the same on the links A, B of the connection path Con1. In other words, the links A, B of the connection path Con1 are interchangeable.

Further, it is assumed that each link A, B in operational state ON may be configured to transmit with a 4-QAM, 16-QAM or 64-QAM modulation scheme. In other words, each link A, B has four possible link configurations:
- first link configuration: operational state OFF;
- second link configuration: operational state ON, 4-QAM;
- third link configuration: operational state ON, 16-QAM; and
- fourth link configuration: operational state ON, 64-QAM.

This is not limiting, since any modulation scheme may be adopted over the first and second links A, B. Further, it is assumed that the 4-QAM, 16-QAM or 64-QAM modulation schemes allow achieving, on each link, a link capacity of 2xC Mb/s, 4xC Mb/s and 6xC Mb/s with a link power consumption of 5.06 W, 5.38 W and 7.39 W, respectively.

The operator responsible of managing the network may then provide a plurality of connection configurations or states for the connection path Con1, each state comprising a respective combination of link configurations of the links A, B. For instance:
- first state: link A in operational state ON, 4-QAM and link B in operational state OFF;
- second state: link A in operational state ON, 16-QAM and link B in operational state OFF;
- third state: link A in operational state ON, 64-QAM and link B in operational state OFF;
- fourth state: link A in operational state ON, 4-QAM and link B in operational state ON, 4-QAM;
- fifth state: link A in operational state ON, 16-QAM and link B in operational state ON, 4-QAM;
- fifth state: link A in operational state ON, 64-QAM and link B in operational state ON, 4-QAM; and so on.

Then, for each state, the operator preferably determines a respective state capacity as a sum of the link capacities of the links A, B. More than one state may achieve the same state capacity, as it will be discussed in further detail herein after. For instance, both the second state (link A in operational state ON, 16-QAM and link B in operational state OFF) and the fourth state (link A in operational state ON, 4-QAM and link B in operational state ON using 4-QAM) achieve a same state capacity equal to 4xC Mb/s.

Then, the operator preferably determines a state power consumption for each of the above states, as a sum of the link power consumptions of the links A, B.

Then, the operator may summarize the above states with the respective state capacities and state power consumptions in the state table ST.

In the state table ST, the states are preferably grouped according to their state capacity. In particular, for each possible state capacity, the state table ST comprises a respective row in turn comprising the state power consumption(s) of the state(s) providing that state capacity and configuration information relating to that state(s).

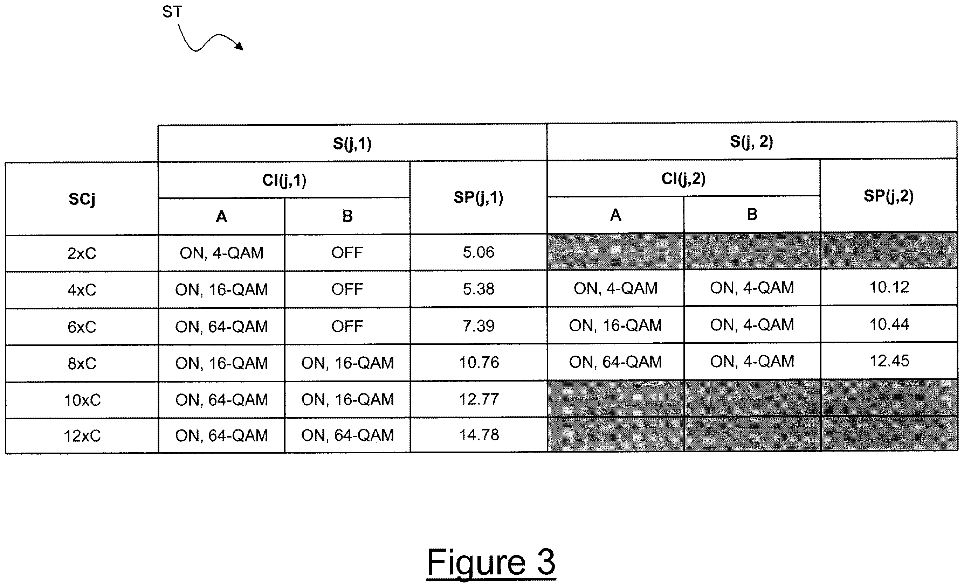

Figure 3 shows an exemplary state table ST relating to the connection path Con1, under the above exemplary assumptions on the possible link configurations for the links A and B.

According to such exemplary assumptions, the connection path Con1 may operate according to nine possible states S(j, n) that may be grouped according to six possible state capacities SC1, ... SC6. Each state capacity SC1, ... SC6 may be achieved by one or two possible states S(j, 1), S(j, 2).

In particular, a state capacity of 2xC Mb/s may be achieved only by a state S(1,1) in which the link A is in operational state ON with 4-QAM modulation and the link B is in operational state OFF. In this case, the state power consumption is 5.06 W.

Further, a state capacity of 4xC Mb/s may be achieved by two states S(2,1), S(2,2): in S(2,1) the link A is in operational state ON with 16-QAM modulation and the link B is in operational state OFF, the state power consumption being 5.38 Watt; in S(2,2) both links A, B are in operational state ON with 4-QAM modulation, the state power consumption being 5.06x2=10.12 W.

Further, a state capacity of 6xC Mb/s may be achieved by two states S(3,1), S(3,2): in S(3,1) the link A is in operational state ON with 64-QAM modulation and the link B is in operational state OFF, the state power consumption being 7.39 W; in S(3,2) the link A is in operational state ON with 16-QAM modulation and the link B is in operational state ON with 4-QAM modulation, the state power consumption being 5.38+5.06=10.44 W.

Further, a state capacity of 8xC Mb/s may be achieved by two states S(4,1), S(4,2): in S(4,1) both links A, B are in operational state ON with 16-QAM modulation, the state power consumption being 5.38x2=10.76 W; in S(4,2) the link A is in operational state ON with 64-QAM modulation and the link B is in operational state ON with 4-QAM modulation, the state power consumption being 7.39+5.06=12.45 W.

Further, a state capacity of 10xC Mb/s may be achieved only by a state S(5,1), in which the first link A is in operational state ON with 64-QAM modulation and the link B is in operational state ON with 16-QAM modulation. In this case, the state power consumption is 7.39+5.38=12.77 W.

Finally, a state capacity of 12xC Mb/s may be achieved only by a state S(6,1), in which both links A, B are in operational state ON with 64-QAM modulation. In this case, the state power consumption is 7.39x2=14.78 W.

As shown in Figure 3, the state table ST comprises six rows, one for each possible state capacity. Each row comprises the state power consumption(s) and configuration information relating to the one or two states S(j, 1), S(j, 2) providing that state capacity organized in a number of columns.

A first column of the state table ST preferably comprises the state capacities SC1, ... SC6. The state capacities SC1, ... SC6 are preferably expressed in C Mb/s, C being the symbol rate of each link A, B of connection path Con1.

A second column and a third column comprise the configuration information CI(j, n) associated to a first state S(j, 1) providing each of the state capacities SC1, ... SC6. In particular, the second column comprises a first portion of the configuration information CI(j, 1) related to the link A (in particular, operational state and modulation scheme of the link A), while the third column comprises a second portion of the configuration information CI(j, 1) related to the link B (in particular, operational state and modulation scheme of the link B).

A fourth column of the state table ST comprises the state power consumption SP(j, 1) associated to the first state S(j, 1) providing the state capacities SC1, ... SC6. The state power consumptions SP(j, 1) are preferably expressed in Watts.

A fifth column and a sixth column comprise configuration information CI(j, n) associated to a second state S(j, 2) providing each of the state capacities SC1, ... SC6. In particular, the fifth column comprises a first portion of the configuration information CI(j, 2) related to the link A (in particular, operational state and modulation scheme of the link A), while the sixth column comprises a second portion of the configuration information CI(j, 2) related to the link B (in particular, operational state and modulation scheme of the link B).

A seventh column of the state table ST comprises the state power consumption SP(j, 2) associated to the second state S(j, 2) providing the state capacities SC1, ... SC6. The state power consumptions SP(j, 2) are preferably expressed in Watts.

After generating the state table ST, the operator responsible of managing the network may input the state table ST to the control module CM of the link manager LM through the terminal T.

Alternatively to the above described manual generation of the state table ST, the state table ST may be at least partially automatically generated by the control module CM. In this case, the control module CM may retrieve information needed to generate the state table ST from a database accessible by the link manager LM.

Once the state table ST is either automatically or manually generated, it is stored in a memory device of the link manager LM or in database accessible by the link manager LM, so that it may be accessed by the control module CM.

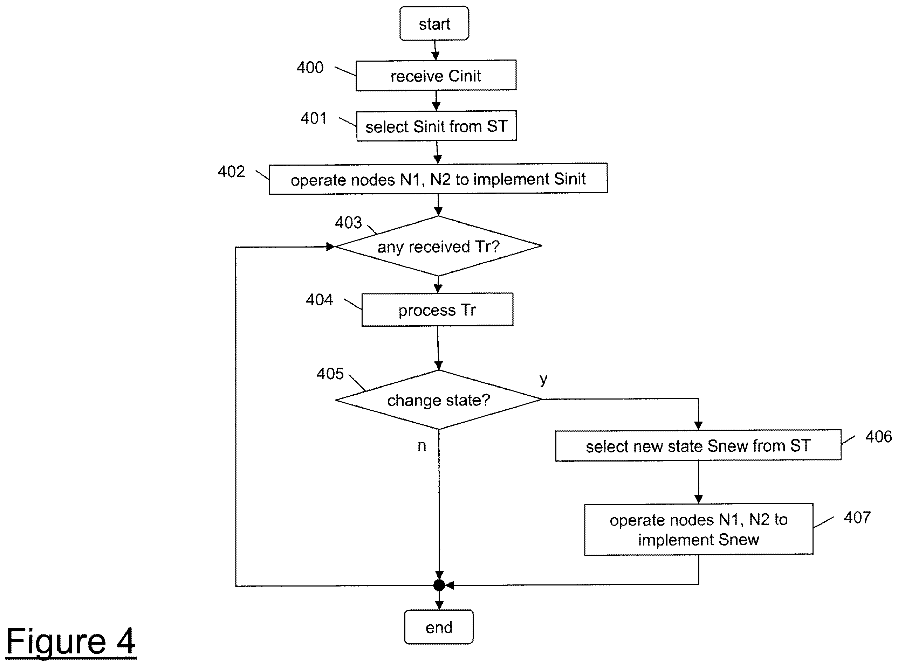

The link manager LM (in particular, the control module CM) preferably uses the state table ST for setting and changing the state of connection path Con1, as it will be described herein after by referring to the flow chart of Figure 4.

In operative conditions, after deploying the connection path Con1 between nodes N1, N2, the operator responsible of managing the network preferably determines an initial capacity Cinit for connection path Con1. The initial capacity Cinit may be determined according to different criteria. Preferably, the initial capacity Cinit is determined on the basis of data traffic requests from users of the communication network which are to be routed on connection path Con1. Optionally, the Quality of Service (QoS) associated to the services transported by these data is taken into account.

Then, the operator preferably provides the value of the initial capacity Cinit to the control module CM (e.g. by using the keyboard of the terminal T).

Upon reception of the value of the initial capacity Cinit (step 400), the control module CM preferably looks through the state table ST and selects an initial state Sinit (step 401). The initial state Sinit is preferably selected amongst the states S(j, n) stored in the state table ST as the state which fulfills the following requirements:
- its associated state capacity is higher than or equal to the initial capacity Cinit;
- it matches the current propagation conditions over the links A, B of connection path Con1 (i.e. it guarantees a reliable data transmission over the links A, B, given their current propagation conditions); and
- it is associated to the minimum state power consumption.

Preferably, the initial state Sinit is selected amongst the states S(j, n) having the minimum state capacity, amongst the states having a state capacity higher than or equal to the initial capacity Cinit. Advantageously, such a selection guarantees that connection path Con1 and nodes N1, N2 operate according to a configuration which matches the propagation conditions over connection path Con1 by consuming the minimum amount of power and network resources.

At step 401, the control module CM receives information relating to the current propagation conditions over the links A, B for properly selecting the initial state Sinit. Such information may be provided to the control module CM either by the operator (through the terminal T) or the by nodes N1, N2 (in particular, by their ACM functions).

Alternatively to the above described automatic selection of the initial state Sinit performed by the control module CM, the operator may manually select the initial state Sinit for connection path Con1. In this case, the control module CM may run a graphical user interface displaying the state table ST onto the display of the terminal T. The operator may then look through the state table ST and directly select the initial state Sinit (e.g. by pressing a key onto the keyboard of the terminal T).

Once the initial state Sinit is selected either automatically or manually, the control module CM preferably reads in the state table ST the configuration information related to that state Sinit and operates the nodes N1, N2 so that they implement the selected initial state Sinit (step 402), namely so that they configure the data transmission over the links A, B of connection path Con1 (in particular, to configure their respective transmitters) according to the configuration information associated to the initial state Sinit.

For instance, with reference to the exemplary state table ST of Figure 3, it is assumed that the operator determines that an initial capacity Cinit equal to 6xC Mb/s is sufficient to support the data traffic requests and to provide the required QoS. The initial state Sinit is then preferably selected among the states S(3, 1) and S(3, 2) having the state capacity 6xC Mb/s. If both states S(3, 1) and S(3, 2) match the propagation conditions over connection path Con1 (e.g. the weather is good), state S(3, 1) of table ST of Figure 3 may be selected as initial state Sinit, since it has the minimum state power consumption SP(3, 1)= 7.39 W. In this case, the links A, B of connection path Con1 are configured according to the configuration information CI(3, 1), namely link A is in operational state ON and is configured to implement a 64-QAM modulation, while link B is in operational state OFF. If state S(3, 1) does not match the propagation conditions (e.g. the weather is bad and a greater noise immunity is required), state S(3, 2) may be selected as initial state Sinit, since the modulation schemes of this state (namely, 16-QAM over link A and 4-QAM over link B) are more robust to adverse propagation conditions than the modulation scheme of state S(3, 1) (namely, 64-QAM).

Then, the control module CM listens for possible state change triggers Tr (step 403). A state change trigger Tr preferably comprises information indicative of an event occurring in the communication network CN (or which will occur in the communication network CN) and which may require a state change for the connection path Con1. A state change trigger Tr may comprise:
- information indicative of an increase or decrease of the amount of data to be routed on connection path Con1 and/or a change of the Quality of Service (QoS) associated to such data;
- information indicative of a change of propagation conditions over the links A, B of connection path Con1;
- information indicative of a change of power consumption requirements;
- information indicative of failure involving one or more links A, B of connection path Con1 and/or nodes N1, N2;
- an alarm relating to one or more links A, B of connection path Con1 and/or nodes N1, N2; and
- traffic statistics over periods of time (day, month, year).

The state change trigger Tr may be input by the operator responsible of managing the network to the link manager LM by means of the terminal T. This is the case, for instance, when the trigger Tr comprises information indicative of an increase or decrease of the amount of data to be routed on connection path Con1.

Alternatively, the state change trigger Tr may be automatically generated and input to the link manager LM by the nodes of the communication network CN. This is the case, for instance, when the trigger Tr comprises an alarm relating to one or more links A, B and/or one or more nodes N1, N2 of connection path Con1.

Alternatively, the state change trigger Tr may be generated by the control module CM itself. For instance, the operator may decide to trigger the changing of the state of connection path Con1 according to the hour of the day. In this case, the change state trigger Tr may be automatically generated at the control module CM in cooperation with a clock. Moreover, the control module CM may automatically generate a change state trigger Tr when a problem in the power supply to nodes N1, N2 of connection path Con1 arises. Such a problem may imply a partial or total interruption of the power supply, and devices such as extra batteries or photovoltaic panels may be used, which however provide a limited power. In this case, the change state trigger Tr may be automatically generated at the control module CM when such devices are switched on.

Upon reception of a change state trigger Tr, the control module CM preferably processes the information comprised in the change state trigger Tr (step 404). In particular, at step 404, the control module CM may determine a new capacity Cnew which the connection path Con1 shall support, or a new power consumption Pnew which the connection path Con1 shall consume or new propagation conditions over links A, B of connection path Con1.

Then, at step 405, the control module CM preferably checks whether a state change of the connection path Con1 is needed.

In particular, if at step 404 the control module CM has determined from the state change trigger Tr a new capacity Cnew, at step 405 the control module CM preferably checks whether the state capacity of the initial state Sinit is equal to or higher than the new capacity Cnew and, in the negative, it determines that a state change is needed.

On the other hand, if at step 404 the control module CM has determined from the state change trigger Tr a new power consumption Pnew, at step 405 the control module CM preferably checks whether the state power consumption of the initial state Sinit is lower than or equal to the new power consumption Pnew and, in the negative, it determines that a state change is needed.

Moreover, if at step 404 the control module CM has determined from the state change trigger Tr new propagation conditions over the links A, B, at step 405 the control module preferably checks whether the initial state Sinit matches the new propagation conditions and, in the negative, it determines that a state change is needed.

If at step 405 the control module CM determines that a state change of the connection path Con1 is not needed, no action is further taken by the control module CM, which then waits for possible new change state triggers Trs.

Otherwise, at step 406, the control module CM looks again through the state table ST and selects, amongst the states S(j, n), a new state Snew matching the new capacity Cnew or the new power consumption Pnew or the new propagation conditions. The new state Snew is preferably selected amongst the states S(j, n) as the state which fulfills the following requirements:
- its associated state capacity is higher than or equal to the initial capacity Cinit or the new capacity Cnew, if a new capacity Cnew was determined from the trigger Tr;
- it matches the current propagation conditions over the links A, B of connection path Con1 or the new propagation conditions, if new propagation conditions were determined from the trigger Tr; and
- it is associated to the minimum state power consumption, the minimum state power consumption being equal to or lower than the new power consumption Pnew, if a new power was determined from the trigger Tr.

Preferably, the new state Snew is selected amongst the states S(j, n) having the minimum state capacity, amongst the states having a state capacity higher than or equal to the initial capacity Cinit or new capacity Cnew, if a new capacity Cnew was determined from the trigger Tr. Advantageously, such a selection guarantees that connection path Con1 and nodes N1, N2 continues operating according to a configuration which matches the propagation conditions over connection path Con1 by consuming the minimum amount of power and network resources.

Then, at step 407, the control module CM preferably reads in the state table ST the configuration information related to the new state Snew and operates the nodes N1, N2 so that they implement the selected new state Snew, namely so that they configure the data transmission over the links A, B of connection path Con1 (in particular, they configure their respective transmitters) according to the configuration information associated to the new state Snew.

The nodes N1, N2 preferably change their configuration by using their ACM and ATPC functions.

Step 404-406 may be manually performed by the operator responsible of managing the network by means of the terminal T, which may display the table ST. In particular, the control module CM may run the graphical user interface allowing to display the state table ST onto the display of the terminal T. When the operator decides to change the state of connection path Con1, it manually selects the new state Snew (e.g. by pressing a key onto the keyboard of the terminal T). Then, the control module CM preferably performs step 407 described above.

Herein after, some exemplary applications of the above described method are provided.

According to a first exemplary application, the operator may realize that the amount of data to be routed over connection path Con1 is increasing from the initial capacity Cinit to a new capacity Cnew (e.g. because new users join the communication network) so that the state capacity of the initial state Sinit (for instance, the state S(2, 1) having a state capacity SC2 of 4xC Mb/s) is no more sufficient to support the data transmission. The operator may input the new capacity Cnew in the form of a state change trigger Tr to the link manager LM which, upon reception of the trigger Tr, determines that a change of the state of the connection path Con1 from the initial state Sinit to a new state Snew whose state capacity is higher than or equal to Cnew is needed. For instance, if the new capacity Cnew is of 5.5xC Mb/s, the link manager LM may select the new state Snew between state S(3, 1) and S(3, 2), and in particular it may select as new state Snew the state S(3, 1), whose state capacity SC3 is equal to 6xC Mb/s and is sufficient to support transmission of the increased amount of data, while guaranteeing the minimum power consumption, provided that the propagation conditions over the links A, B are matched.

According to a second exemplary application, one of the nodes N1, N2 may detect a failure affecting one of the links of connection path Con1, e.g. the link B. In this case, an alarm indicating the failure is received at the link manager LM in the form of a state change trigger Tr. Upon reception of the trigger Tr, the link manager LM may decide to select a new state Snew whereby the link B is in operational state OFF and the state capacity (which basically is the link capacity of the link A) is higher than or equal to the state capacity of the connection path Con1 before the failure of the link B. The link manager LM may also decide to apply a traffic prioritization scheme on the basis of the QoS of the services routed over connection path Con1, in order to guarantee transmission of higher priority traffic only.

According to a third exemplary application, the operator may decide to switch from one state to another on the basis of traffic statistics over a period of time, e.g. one day. It is assumed, for example, that such statistics foresee that during the day the traffic requests over connection path Con1 change in such a way that
- during the morning, a capacity equal to 6xC Mb/s is needed;
- the capacity needs rise to 10xC Mb/s at lunch time (namely between 12:00 am to 14:00 pm);
- during the afternoon, a capacity equal to 6xC Mb/s is needed; and
- the capacity needs drop to 2xC Mb/s during the evening and night.

In this case, the operator may provide the above time schedule to the link manager LM through the terminal T. The link manager LM may then implement a clock and, by comparing the clock with the time schedule provided by the operator, generating suitable state change triggers comprising the requested capacities Cnew. In particular, the link manager LM may set connection path Con1 to operate according to state S(3, 1) during the morning, switch to state S(5, 1) between 12:00 am to 14:00 pm, switch again to state S(3, 1) during the afternoon and finally switch to state S(1, 1) during the evening and night, provided that such states match the propagation conditions over connection path Con1 (which may vary with time during the day).

According to a fourth exemplary application, the state of the connection path Con1 may be changed based on a variation in the propagation conditions. In this situation, when any of the nodes N1, N2 detects a variation in propagation conditions determining a degradation of the data transmission over the connection path Con1, the link manager LM may decide to switch the state of connection path Con1 from an initial state Sinit to a state Snew guaranteeing a more robust data transmission, possibly at the expense of a lower capacity. In the example of state table ST of Figure 3, if the initial state Sinit is S(2, 1) and the modulation on link A is 16-QAM, when link A experiences bad weather conditions the link manager LM may decide to switch to a state having the same state capacity SC2 but applying a more robust modulation scheme, e.g. 4-QAM (state S(2, 2) of state table ST). If the initial state is S(6, 1) and the modulation on both links A, B is 64-QAM, when connection path Con1 experiences bad weather conditions the link manager LM may decide to switch to a state applying a more robust modulation scheme, e.g. state S(4, 1) wherein the modulation is 16-QAM, at the expense of a lower capacity.

According to a fifth exemplary application, the state of connection path Con1 may be changed according to power consumption requirements. For instance, over a connection path Con1 operating according to e.g. state S(4, 1) of state table ST, a need to reduce the power consumption of any of the nodes N1, N2 may arise when a failure occurs in a node apparatus or the battery level of a node apparatus drops below a minimum level. In such situations, it is required that the power consumption of the node decreases for guaranteeing its operation. In this case, the link manager LM may decide to switch from state S(4, 1) to a state requiring a lower level of power, e.g. state S(3, 1), at the expense of a lower capacity.

The method of the present invention advantageously allows optimising the power consumption of each connection path Con1 of the communication network CN (namely, of the nodes terminating the connection path Con1). Indeed, the method allows changing the state of the connection path Con1 so as to take into account the actual capacity requirements as well as the actual propagation conditions (namely, the actual amount of traffic to be supported by the communication network and the requirements resulting from the presence of possible failures, interferences, alarms as well as bad propagation conditions, etc.), which may be highly variable over time. In the meanwhile, the method described above allows performing the change of the state of the connection path Con1 by consuming the minimum power.

The method for managing the power consumption has been described above with reference to a connection path Con1 of the communication network CN comprising two parallel links, but it may be likewise applied to any connection path of the communication network CN comprising any number of links (even a single link).

The method for managing the power consumption of the present invention may be applied to the entire communication network CN. In this case, a state table ST as described above is preferably compiled for each connection path of the communication network CN and stored in a link manager LM. The network manager NM shown in Figure 1 preferably cooperates with the link managers LM of the communication network CN and collects the information stored within the state tables ST of the connection paths of the communication network CN.

After deploying the communication network CN, the network manager NM preferably runs an optimisation algorithm able to find a respective state for each connection path of the communication network CN, so that the communication network CN as a whole consumes the minimum power. In this scenario, the respective state for a connection path that the network manager NM may find is not necessarily the state guaranteeing the minimum power consumption for the single connection path. It is indeed the state that, combined with the states of all other connection paths, guarantees the minimum power consumption of the whole communication network CN.

When one or more of the conditions described above triggering the change of the state of a connection path occur, the network manager NM preferably runs the optimisation algorithm and, as a result, it may find that one or more connection paths of the communication network CN shall change their state. Therefore, the network manager NM preferably communicates the new states to the link managers LM in charge of the connection paths which shall change their state. In particular, the control module CM of each link manager LM preferably retrieves the configuration information associated to the new state for the respective connection path and operate the nodes terminating that connection so that they implement the selected configuration. The nodes may switch to the selected configuration by using their ACM and ATPC functions.

Advantageously, the method of the present invention may be executed in a centralized way and it allows optimising the power consumption not only of the single connection paths of the communication network CN but also of the entire communication network CN by taking into account the actual capacity needs of the communication network CN.

The functions of the various elements shown in Figures 1 and 2 may be provided through the use of dedicated hardware, as well as hardware capable of executing software in association with appropriate software. The functions of the various elements may be provided by a single dedicated processor, by a single shared processor or by a plurality of individual processors, some of which may be shared. Moreover, the elements may comprise, without limitation, a digital signal processor (DSP) hardware, a network processor, an application specific integrated circuit (ASIC), a field programmable gate array (FPGA), a read-only memory (ROM) for storing software, a random access memory (RAM) and a non volatile storage. Other hardware, conventional and/or custom, may also be included.

It should be appreciated by those skilled in the art that any block diagrams herein, as those of Figures 1 and 2, represent conceptual views of illustrative circuitry embodying the principles of the invention. Similarly, it will be appreciated that any flow charts, flow diagrams, state transition diagrams, pseudo code, and the like, as that of Figure 4, represent various processes which may be substantially represented in computer readable medium and so executed by a computer or processor, whether or not such computer or processor is explicitly shown.

## Claims

1. A method for managing a power consumption of a radio communication network (CN), said radio communication network (CN) comprising at least two nodes (N1, N2) and a connection path (Con1) connecting said at least two nodes (N1, N2), said method comprising:
a) determining a set of states (S(j, n)) of said connection path (Con1), wherein said connection path (Con1), in each state, has a state capacity (SCj) and a state power consumption (SP(j, n));
b) upon reception of a request (Cinit, Cnew, Pnew) relating to traffic carried on said connection path (Con1), selecting a state (Sinit, Snew) having a minimum state power consumption within said set of states (S1, ... S6), said selected state (Sinit, Snew) having a state capacity (SCj) higher than or equal to a capacity (Cinit, Cnew) associated to said traffic and matching propagation conditions of said connection path (Con1); and
c) operating said nodes (N1, N2) so as to bring said connection path (Con1) in said selected state (Sinit, Snew); **characterized in that**
d) said selected state (Sinit, Snew) has a minimum state capacity amongst the states (S1, ... S6) having a state capacity (SCj) higher than or equal to said capacity (Cinit, Cnew).

2. The method according to claim 1, wherein each state of said set of states (S1, ... S6) of said connection path (Con1) is indicative of a possible configuration of one or more links (A, B) comprised in said connection path (Con1), said possible configuration comprising, for each of said one or more links (A, B), one or more of:
- an operational state ON-OFF of the link (A, B);
- a modulation scheme applied for data transmission over the link (A, B);
- a coding scheme applied for data transmission over the link (A, B);
- a symbol rate applied for data transmission over the link (A, B); and
- a number of independent radio frequency carriers and frequencies of the radio frequency carriers used for data transmission over the link (A, B).

3. The method according to any of the preceding claims, wherein said request (Cnew) is indicative of a variation in said capacity (Cinit, Cnew) associated to said traffic.

4. The method according to any of the preceding claims, wherein said request is indicative of a variation in said propagation conditions.

5. The method according to any of the preceding claims, wherein said request (Pnew) is indicative of a variation in the power consumption of said connection path (Con1).

6. The method according to any of the preceding claims, wherein said request is indicative of a failure affecting said connection path (Con1).

7. The method according to any of the preceding claims, wherein said operating is performed by using at least one adaptive code modulation function and/or at least one automatic transmitter power control function of said nodes (N1, N2).

8. A computer program product comprising computer-executable instructions for performing, when the program is run on a computer, the steps of the method according to any of the preceding claims.

9. A link manager (LM) for a radio communication network (CN) comprising at least two nodes (N1, N2) and a connection path (Con1) for connecting said at least two nodes (N1, N2) under respective propagation conditions, said link manager (LM) being configured to:
- determine a set of states (S(j, n)) of said connection path (Con1), wherein said connection path (Con1), in each state, has a state capacity (SCj) and a state power consumption (SP(j, n));
- upon reception of a request (Cinit, Cnew, Pnew) relating to traffic carried on said connection path (Con1), select a state (Sinit, Snew) having a minimum state power consumption within said set of states (S1, ... S6), said selected state (Sinit, Snew) having a state capacity (SCj) higher than or equal to a capacity (Cinit, Cnew) associated to said traffic and matching said propagation conditions of said connection path (Con1); and
- operate said nodes (N1, N2) so as to bring said connection path (Con1) in said selected state (Sinit, Snew)
- **characterized in that** said selected state (Sinit, Snew) has a minimum state capacity amongst the states (S1, ... S6) having a state capacity (SCj) higher than or equal to said capacity (Cinit, Cnew)..

10. The link manager (LM) of claim 9, said link manager (LM) being implemented at a node of said radio communication network (CN).

11. The link manager (LM) of claim 9, said link manager (LM) being implemented at an apparatus connected to a node of said radio communication network (CN).

12. A radio communication network (CN) comprising at least two nodes (N1, N2) and a connection path (Con1) for connecting said at least two nodes (N1, N2) under respective propagation conditions, said radio communication network (CN) further comprising a link manager (LM) according to any of claims 9 to 11.

13. The communication network (CN) according to claim 12, said communication network (CN) further comprising a network manager (NM) configured to:
- upon reception of said request (Cinit, Cnew, Pnew), select a state (Sinit, Snew) within said set of states (S1, ... S6), said selected state (Sinit, Snew) having a state capacity (SCj) higher than or equal to a capacity (Cinit, Cnew) associated to said traffic and matching the propagation conditions of said connection path (Con1), said selected state (Sinit, Snew) being such that said communication network (CN) as a whole consumes a minimum power; and
- operate said nodes (N1, N2) so as to bring said connection path (Con1) in said selected state (Sinit, Snew).

## Patentansprüche

1. Verfahren zum Verwalten eines Stromverbrauchs eines Funkkommunikationsnetzwerks (CN), wobei besagtes Funkkommunikationsnetzwerk (CN) mindestens zwei Knoten (N1, N2) und einen Verbindungspfad (Con1) umfasst, der besagte mindestens zwei Knoten (N1, N2) verbindet, wobei besagtes Verfahren umfasst:
a) Bestimmen eines Satzes von Zuständen (S(j, n)) besagten Verbindungspfades (Con1), wobei besagter Verbindungspfad (Con1), in jedem Zustand, eine Zustandskapazität (SCj) und einen Zustandsstromverbrauch (SP(j, n)) aufweist;
b) nach Erhalt einer Anforderung (Cinit, Cnew, Pnew), die sich auf den auf besagtem Verbindungspfad (Con1) transportierten Verkehr bezieht, Auswählen eines Zustands (Sinit, Snew), der einen minimalen Zustandsstromverbrauch innerhalb besagten Satzes von Zuständen (S1, ... S6) aufweist, wobei besagter ausgewählter Zustand (Sinit, Snew) eine Zustandskapazität (SCj) aufweist, die höher ist oder gleich einer Kapazität (Cinit, Cnew), die mit besagtem Verkehr verbunden ist und zu den Verteilungsbedingungen besagten Verbindungspfades (Con1) passt; und
c) Betreiben besagter Knoten (N1, N2), um besagten Verbindungspfad (Con1) in besagten ausgewählten Zustand (Sinit, Snew) zu bringen; **dadurch gekennzeichnet, dass**
d) besagter ausgewählter Zustand (Sinit, Snew) eine minimale Zustandskapazität unter den Zuständen (S1, ... S6) aufweist, die eine Zustandskapazität (SCj) aufweisen, die größer oder gleich besagter Kapazität (Cinit, Cnew) ist.

2. Verfahren nach Anspruch 1, wobei jeder Zustand besagten Satzes von Zuständen (S1, ... S6) besagten Verbindungspfades (Con1) indikativ ist für eine mögliche Konfiguration einer oder mehrerer Verbindungen (A, B), die umfasst sind in besagtem Verbindungspfad (Con1), wobei besagte mögliche Konfiguration umfasst, für jede besagter einen oder mehrerer Verbindungen (A, B), einen oder mehrere aus:
- ein Betriebszustand ON-OFF der Verbindung (A, B);
- ein Modulationsschema, das angewendet wird für die Datenübertragung über die Verbindung (A, B);
- ein Codierschema, das angewendet wird für die Datenübertragung über die Verbindung (A, B);
- eine Symbolrate, die angewendet wird für die Datenübertragung über die Verbindung (A, B); und
- eine Anzahl unabhängiger Funkfrequenzträger und Frequenzen der Funkfrequenzträger, die verwendet werden für die Datenübertragung über die Verbindung (A, B).

3. Verfahren nach einem beliebigen der vorhergehenden Ansprüche, wobei besagte Anforderung (Cnew) indikativ ist für eine Variation in besagter Kapazität (Cinit, Cnew), die mit besagtem Verkehr verbunden ist.

4. Verfahren nach einem beliebigen der vorhergehenden Ansprüche, wobei besagte Anforderung indikativ ist für eine Variation in besagten Verteilungsbedingungen.

5. Verfahren nach einem beliebigen der vorhergehenden Ansprüche, wobei besagte Anforderung (Pnew) indikativ ist für eine Variation in dem Stromverbrauch besagten Verbindungspfades (Con1).

6. Verfahren nach einem beliebigen der vorhergehenden Ansprüche, wobei besagte Anforderung indikativ ist für einen Fehler, der besagten Verbindungspfad (Con1) betrifft.

7. Verfahren nach einem beliebigen der vorhergehenden Ansprüche, wobei besagter Betrieb durchgeführt wird unter Verwenden mindestens einer adaptiven Codemodulationsfunktion und/oder mindestens einer automatischen Senderstromkontrollfunktion besagter Knoten (N1, N2).

8. Computerprogramm-Produkt, umfassend computerausführbare Befehle zum Durchführen, wenn das Programm auf einem Computer ausgeführt wird, der Schritte des Verfahrens nach einem beliebigen der vorhergehenden Ansprüche.

9. Verbindungsmanager (LM) für ein Funkverbindungsnetzwerk (CN), umfassend mindestens zwei Knoten (N1, N2) und einen Verbindungspfad (Con1) zum Verbinden besagter mindestens zwei Knoten (N1, N2) unter entsprechenden Verteilungsbedingungen, wobei besagter Verbindungsmanager (LM) konfiguriert ist zum:
- Bestimmen eines Satzes von Zuständen (S(j, n)) besagten Verbindungspfades (Con1), wobei besagter Verbindungspfad (Con1), in jedem Zustand, eine Zustandskapazität (SCj) und einen Zustandsstromverbrauch (SP(j, n)) aufweist;
- nach Erhalt einer Anforderung (Cinit, Cnew, Pnew), die sich auf den auf besagtem Verbindungspfad (Con1) transportierten Verkehr bezieht, Auswählen eines Zustands (Sinit, Snew), der einen minimalen Zustandsstromverbrauch innerhalb besagten Satzes von Zuständen (S1, ... S6), besagter ausgewählter Zustand (Sinit, Snew) eine Zustandskapazität (SCj) aufweist, die höher oder gleich einer Kapazität (Cinit, Cnew) ist, die mit besagtem Verkehr verbunden ist und zu besagten Verteilungsbedingungen besagten Verbindungspfades (Con1) passt; und
- Betreiben besagter Knoten (N1, N2), um besagten Verbindungspfad (Con1) in besagten ausgewählten Zustand (Sinit, Snew) zu bringen
- **dadurch gekennzeichnet, dass** besagter ausgewählter Zustand (Sinit, Snew) eine minimale Zustandskapazität unter den Zuständen (S1, ... S6) aufweist, die eine Zustandskapazität (SCj) aufweisen, die größer oder gleich besagter Kapazität (Cinit, Cnew) ist.

10. Verbindungsmanager (LM) nach Anspruch 9, wobei besagter Verbindungsmanager (LM) implementiert ist in einem Knoten besagten Funkverbindungsnetzwerks (CN).

11. Verbindungsmanager (LM) nach Anspruch 9, wobei besagter Verbindungsmanager (LM) implementiert ist in einer Vorrichtung, die verbunden ist mit einem Knoten besagten Funkkommunikationsnetzwerks (CN).

12. Funkverbindungsnetzwerk (CN), umfassend mindestens zwei Knoten (N1, N2) und einen Verbindungspfad (Con1) zum Verbinden mindestens zweier Knoten (N1, N2) unter entsprechenden Verteilungsbedingungen, wobei besagtes Funkverbindungsnetzwerk (CN) weiterhin umfasst einen Verbindungsmanager (LM) nach einem beliebigen der Ansprüche 9 bis 11.

13. Kommunikationsnetzwerk (CN) nach Anspruch 12, wobei besagtes Kommunikationsnetzwerk (CN) weiterhin umfasst einen Netzwerkmanager (NM), der konfiguriert ist:
- nach Erhalt besagter Anforderung (Cinit, Cnew, Pnew), zum Auswählen eines Zustands (Sinit, Snew) innerhalb besagten Satzes von Zuständen (S1, ... S6), wobei besagter ausgewählter Zustand (Sinit, Snew) eine Zustandkapazität (SCj) aufweist, die höher ist oder gleich einer Kapazität (Cinit, Cnew), die mit besagtem Verkehr verbunden ist und zu den Verteilungsbedingungen besagten Verbindungspfades (Con1) passt, wobei besagter ausgewählter Zustand (Sinit, Snew) so ist, dass besagtes Kommunikationsnetzwerk (CN) als Ganzes eine minimale Energie verbraucht; und
- Betreiben besagter Knoten (N1, N2), um besagten Verbindungspfad (Con1) in besagten ausgewählten Zustand (Sinit, Snew) zu bringen.

## Revendications

1. Procédé de gestion de la consommation d'énergie d'un réseau de communication radio (CN), ledit réseau de communication radio (CN) comprenant au moins deux noeuds (N1, N2) et un chemin de connexion (Con1) connectant ledit ou lesdits noeuds (N1, N2), ledit procédé comprenant les étapes suivantes :
a) déterminer un ensemble d'états (S(j, n)) dudit chemin de connexion (Con1), ledit chemin de connexion (Con1), dans chaque état, ayant une capacité d'état (SCⱼ) et une consommation d'énergie d'état (SP(j, n)) ;
b) à la réception d'une demande (Cinit, Cnew, Pnew) relative au trafic transporté sur ledit chemin de connexion (Con1), sélectionner un état (Sinit, Snew) présentant une consommation d'énergie d'état minimale au sein dudit ensemble d'états (S1...S6), ledit état sélectionné (Sinit, Snew) ayant une capacité d'état (SCⱼ) supérieure ou égale à une capacité (Cinit, Cnew) associée audit trafic et respectant les conditions de propagation dudit chemin de connexion (Con1) ; et
c) exploiter lesdits noeuds (N1, N2) de sorte à amener ledit chemin de connexion (Con1) dans ledit état sélectionné (Sinit, Snew) ; **caractérisé en ce que**
d) ledit état sélectionné (Sinit, Snew) a une capacité d'état minimale parmi les états (S1...S6) ayant une capacité d'état (SCⱼ) supérieure ou égale à ladite capacité (Cinit, Cnew).

2. Procédé selon la revendication 1, dans lequel chaque état dudit ensemble d'états (S1...S6) dudit chemin de connexion (Con1) indique une configuration possible d'une ou plusieurs liaisons (A, B) comprises dans ledit chemin de connexion (Con1), ladite configuration possible comprenant, pour chacune desdites liaisons (A, B), un ou plusieurs éléments parmi :
- un état de fonctionnement activé-désactivé de la liaison (A, B) ;
- un schéma de modulation appliqué pour la transmission de données sur la liaison (A, B) ;
- un schéma de codage appliqué pour la transmission de données sur la liaison (A, B) ;
- un débit de symboles appliqué pour la transmission de données sur la liaison (A, B) ; et
- un nombre de porteuses radiofréquence indépendantes et de fréquences des porteuses radiofréquence utilisées pour la transmission de données sur la liaison (A, B).

3. Procédé selon l'une quelconque des revendications précédentes, dans lequel ladite demande (Cnew) indique une variation de ladite capacité (Cinit, Cnew) associée audit trafic.

4. Procédé selon l'une quelconque des revendications précédentes, dans lequel ladite demande indique une variation desdites conditions de propagation.

5. Procédé selon l'une quelconque des revendications précédentes, dans lequel ladite demande (Pnew) indique une variation de la consommation d'énergie dudit chemin de connexion (Con1).

6. Procédé selon l'une quelconque des revendications précédentes, dans lequel ladite demande indique une panne affectant ledit chemin de connexion (Con1).

7. Procédé selon l'une quelconque des revendications précédentes, dans lequel ladite exploitation est réalisée en utilisant au moins une fonction de modulation de code adaptative et/ou au moins une fonction de commande de puissance d'émetteur desdits noeuds (N1, N2).

8. Produit-programme informatique comprenant des instructions exécutables sur ordinateur destiné à mettre en oeuvre, lorsque le programme est exécuté sur un ordinateur, les étapes du procédé selon l'une quelconque des revendications précédentes.

9. Gestionnaire de liaison (LM) destiné à un réseau de communication radio (CN) comprenant au moins deux noeuds (N1, N2) et un chemin de connexion (Con1) pour connecter ledit ou lesdits noeuds (N1, N2) sous des conditions de propagation respectives, ledit gestionnaire de liaison (LM) étant configuré pour :
- déterminer un ensemble d'états (S(j, n)) dudit chemin de connexion (Con1), ledit chemin de connexion (Con1), dans chaque état, ayant une capacité d'état (SCⱼ) et une consommation d'énergie d'état (SP(j, n)) ;
- à la réception d'une demande (Cinit, Cnew, Pnew) relative au trafic transporté sur ledit chemin de connexion (Con1), sélectionner un état (Sinit, Snew) présentant une consommation d'énergie d'état minimale au sein dudit ensemble d'états (S1...S6), ledit état sélectionné (Sinit, Snew) ayant une capacité d'état (SCⱼ) supérieure ou égale à une capacité (Cinit, Cnew) associée audit trafic et respectant lesdites conditions de propagation dudit chemin de connexion (Con1) ; et
- exploiter lesdits noeuds (N1, N2) de sorte à amener ledit chemin de connexion (Con1) dans ledit état sélectionné (Sinit, Snew) ;
- **caractérisé en ce que**
ledit état sélectionné (Sinit, Snew) a une capacité d'état minimale parmi les états (S1...S6) ayant une capacité d'état (SCⱼ) supérieure ou égale à ladite capacité (Cinit, Cnew).

10. Gestionnaire de liaison (LM) selon la revendication 9, ledit gestionnaire de liaison (LM) étant mis en oeuvre au niveau d'un noeud dudit réseau de communication radio (CN).

11. Gestionnaire de liaison (LM) selon la revendication 9, ledit gestionnaire de liaison (LM) étant mis en oeuvre au niveau d'un appareil connecté à un noeud dudit réseau de communication radio (CN).

12. Réseau de communication radio (CN) comprenant au moins deux noeuds (N1, N2) et un chemin de connexion (Con1) destiné à connecter ledit ou lesdits noeuds (N1, N2) sous des conditions de propagation respectives, ledit réseau de communication radio (CN) comprenant en outre un gestionnaire de liaison (LM) selon l'une quelconque des revendications 9 à 11.

13. Réseau de communication radio (CN) selon la revendication 12, ledit réseau de communication radio (CN) comprenant en outre une gestionnaire de réseau (NM) configuré pour :
- à la réception de ladite demande (Cinit, Cnew, Pnew), sélectionner un état (Sinit, Snew) dans ledit ensemble d'états (S1 ...S6), ledit état sélectionné (Sinit, Snew) ayant une capacité d'état (SCⱼ) supérieure ou égale à une capacité (Cinit, Cnew) associée audit trafic et respectant les conditions de propagation dudit chemin de connexion (Con1), ledit état sélectionné (Sinit, Snew) étant tel que ledit réseau de comunication (CN) dans son ensemble consomme une énergie minimale ; et
- exploiter lesdits noeuds (N1, N2) de sorte à amener ledit chemin de connexion (Con1) dans ledit état sélectionné (Sinit, Snew).
